# EUROPEAN PATENT APPLICATION

(11) **EP 4 357 189 A1**
(43) Date of publication of application: **24.04.2024**
(21) Application number: 23204167.3
(22) Date of filing: 17.10.2023
(51) Int. Cl.: B60L 53/14, B60L 58/12, B60L 3/00, B60L 3/12, G01R 31/387, G08G 5/00, H04W 4/021

(54) **SYSTEMS AND METHODS FOR MONITORING ENERGY SYSTEM PERFORMANCE OF A VEHICLE**

(30) Priority: 18.10.2022 US 202217968084
(71) Applicant: Lilium eAircraft GmbH, 82234 Wessling (DE)
(72) Inventor: Apostolyuk, Vladislav, 82234 Wessling (DE); Treyvas, Igor, 82234 Wessling (DE)
(74) Representative: Mathys & Squire

(57) **Abstract**

Various embodiments of the teachings herein include methods for operating a vehicle (100b). The methods may include: accessing a travel plan identifying an intended destination and a predicted state of the energy store including a predicted value for a parameter of the energy store upon arrival; determining an instantaneous location; determining a predicted value for the first operating parameter based on the location and the travel plan; measuring an instantaneous value for the parameter; calculating a first deviation between the predicted value and the instantaneous value; calculating an expected final value for the parameter upon reaching the intended destination based on the instantaneous value; calculating a second deviation between the predicted final value and the expected final value; indicating to an operator both of the deviations; and executing one or more changes to controls of the drive system in response to at least one of the two deviations.

## Description

### TECHNICAL FIELD

The present disclosure relates to vehicles, in general. Some embodiments of the teachings herein include systems and methods for monitoring the performance of an energy system of a vehicle, e.g., analysis and display of one or more state metrics for an energy store.

### BACKGROUND

Vehicles driven by internal combustion engines are typically equipped with a fuel gauge configured to display to a driver or other user a current state of the fuel tank, namely how full the tank is. Some examples display a percentage value, some a fractional value, and so on. More recently, a computer or other controller in the vehicle may be equipped to estimate a how far the vehicle can travel before the fuel reserves are spent. In practice, such calculations may be based on an expected or historical performance of the vehicle, e.g., the mileage. Given a measure of the amount of fuel in the tank, multiplying an expected or historical mileage by the amount of fuel offers this estimated distance before reaching empty, largely a linear relationship. Of course, the display to the driver may include some buffer or other correction factor to improve the likelihood a driver will choose to add fuel before the tank becomes truly empty.

Such methods are less useful in a vehicle using motors driven by electrical stores instead of fuel. Unlike fuel stored in a tank, electrical energy storage response to a power draw does not provide a linear relationship which may be extrapolated quite so easily. That is, a driver of an electric vehicle may see that the energy store is 50% full and assume that 50% of the range of the vehicle is still available. This is not a safe assumption. Merely displaying an equivalent "fuel gauge" for an electrical energy store may, in fact, lead to faulty interpretation and decision making.

### SUMMARY

The teachings of the present disclosure may provide improved systems and/or methods for representing a current or instantaneous state of an energy store in support of appropriate interpretation and/or decision making by a driver or pilot. This may include consideration of an expected travel plan to provide a representation of an expected value of the energy store at arrival upon a planned destination. The particular representation may provide earlier detection of deviations and/or problems with the expected travel plan and allow earlier correction of operating conditions for the vehicle and/or adjustments to the travel plan.

As an example, some embodiments of the teachings herein include a method for operating a drive system of a vehicle including an energy store, the method comprising: accessing a travel plan for the vehicle; wherein the travel plan identifies an intended destination and a predicted state of the energy store including a predicted final value for a first operating parameter of the energy store upon arrival based on a predicted demand from the drive system; determining an instantaneous location of the vehicle; determining a predicted value for the first operating parameter based on the instantaneous location and the travel plan; measuring an instantaneous value for the first operating parameter of the energy store; calculating a first deviation between the predicted value and the instantaneous value; calculating an expected final value for the first operating parameter upon reaching the intended destination based on the instantaneous value; calculating a second deviation between the predicted final value and the expected final value; indicating to an operator both the first deviation and the second deviation; and executing one or more changes to controls of the drive system in response to at least one of the two deviations.

As another example, some embodiments include a system for a vehicle with a drive system supplied by an energy store, the system comprising: a control unit with a processor and a memory; a display configured to display an x versus y graph with travel distance along an x-axis; wherein a leftmost point of the x-axis represents a starting point for a planned trip and a rightmost point of the x-axis represents an intended destination for the planned trip; wherein the memory stores a travel plan includes a predicted state of the energy store including a predicted final value for a first operating parameter of the energy store upon arrival at the intended destination based on a predicted demand from the drive system; wherein the processor indicates an instantaneous location of the vehicle depicted by an active trace moving along the x-axis; wherein a current value for the first operating parameter is indicated by a position of the active trace along a y-axis; wherein the processor accesses the travel plan to determine a predicted value for the first operating parameter based on the instantaneous location and the travel plan; wherein the processor calculates a first deviation between the predicted value and the instantaneous value; wherein the processor calculates an expected final value for the first operating parameter upon reaching the intended destination based on the instantaneous value; wherein the processor calculates a second deviation between the predicted final value and the expected final value; and wherein the display indicates to an operator both the first deviation and the second deviation.

As another example, some embodiments include a vehicle comprising: a drive system; an energy store providing energy to the drive system; a control unit with a processor and a memory; and a display configured to display an x versus y graph with travel distance along an x-axis; wherein a leftmost point of the x-axis represents a starting point for a planned trip and a rightmost point of the x-axis represents an intended destination for the planned trip; wherein the memory stores a travel plan includes a predicted state of the energy store including a predicted final value for a first operating parameter of the energy store upon arrival at the intended destination based on a predicted demand from the drive system; wherein the processor indicates an instantaneous location of the vehicle depicted by an active trace moving along the x-axis; wherein a current value for the first operating parameter is indicated by a position of the active trace along a y-axis; wherein the processor accesses the travel plan to determine a predicted value for the first operating parameter based on the instantaneous location and the travel plan; wherein the processor calculates a first deviation between the predicted value and the instantaneous value; wherein the processor calculates an expected final value for the first operating parameter upon reaching the intended destination based on the instantaneous value; wherein the processor calculates a second deviation between the predicted final value and the expected final value; and wherein the display indicates to an operator both the first deviation and the second deviation.

### BRIEF DESCRIPTION OF THE DRAWINGS

Various details of the teachings herein may be elucidated in the following description of the Figures depicting example embodiments. The embodiments chosen are merely exemplary of these teachings and do not limit the scope of the disclosure. In the drawings:
FIGURE 1 is a schematic drawing showing an example embodiment of a vehicle incorporating teachings of the present disclosure;
FIGURE 2 is a schematic drawing showing an example embodiment of a vehicle incorporating teachings of the present disclosure;
FIGURE 3 is a schematic drawing showing an example embodiment of a system for use in a vehicle;
FIGURE 4 is a drawing showing an example embodiment of a display for a vehicle incorporating teachings of the present disclosure; and
FIGURE 5 is a drawing showing an example embodiment of a display for a vehicle incorporating teachings of the present disclosure.

### DETAILED DESCRIPTION

Drivers of motor vehicles with internal combustion engines often bring assumptions and habits from those vehicles into driving situations with electric propulsion systems. For example, a driver may expect to see a fuel gauge depicting a tank fullness level in terms of percentage or a fraction. Even if such a gauge is available to the driver in a vehicle with electric power stores, however, the information may be misleading instead of helpful. In fact, electric energy storage response to power demands is nonlinear. The behavior of such an energy store may contradict the intuitive interpretation a user is trained to apply from experience.

Some vehicles may provide a driver an estimate of how many miles or kilometers remain before a fuel tank is empty, but these estimates are typically based on a formula multiplying a historical or estimated performance (e.g., miles per gallon) by the amount of fuel remaining in the tank. As the level in the tank becomes lower, the estimate of remaining travel distance may become less relevant as the driver knows he or she must add fuel soon in any case. For a fully electric vehicle, the driver must decide whether the stores are sufficient to reach a final destination or, instead, the stores must be recharged first.

These issues become more critical in the case of an aircraft. In the case of a ground vehicle, running out of fuel or electrical charge may have negative consequences such as stopping in inconvenient locations and/or missing an expected arrival time. Largely, these can be simply avoided by stopping at a fueling station or charging station without making dramatic changes to the route of travel. In the case of an aircraft, however, running out of fuel or electrical charge while in flight may be catastrophic. The location and availability of recharging or refueling stations may be far and few between and may require significant changes to the original flight plan. In such a situation, any chance of running out of fuel or charge should be identified as soon as possible, to allow for changes in the operation of the aircraft or the flight plan, e.g., finding an alternative landing destination to allow refueling or recharging.

The teachings of the present disclosure provide systems and/or methods for addressing these issues. For example, various embodiments of the teachings herein may provide a representation of the current state of the energy stores that supports adequate interpretation and decision making. As another example, the systems and methods described herein may take an initial flight plan or travel plan into account and predict a final state of the energy stores upon arrival at the intended destination. As another example, the teachings herein may provide earlier detection and/or indication of variations from an original travel plan which may affect the energy stores and/or reserves upon arrival. As another example, the teachings herein may be applied to provide compact and easy to understand data for use by a driver or pilot whose previous experience has been with internal combustion engines and fuel gauges.

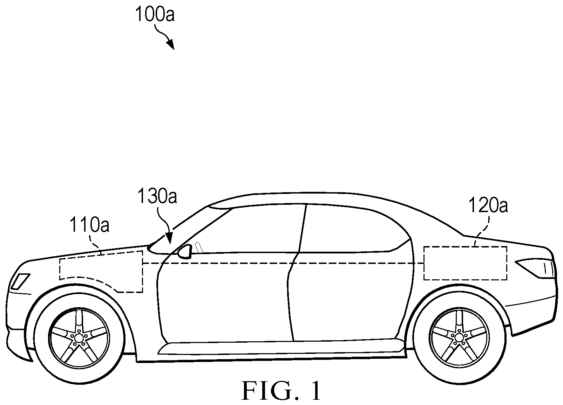

FIGURE 1 is a schematic drawing showing an example embodiment of a vehicle 100a incorporating teachings of the present disclosure. As shown, vehicle 100a comprises a ground vehicle with at least one electric motor 110a for driving the wheels, at least one energy store 120a for providing energy to the electric motor 110a, and a display 130a visible to a driver or occupant of the vehicle 100a. Vehicle 100a may, in some instances, also include an internal combustion engine (a so-called hybrid drive vehicle) . An "electric car" usually refers to an automobile propelled by one or more electric motors 110a using only electrical energy.

The electric motor 110a may comprise an electrical machine converting electrical energy into mechanical energy to drive the wheels. In general, the electric motor 110a may be driven by a direct current supply from the energy store 120a. In some embodiments, the electric motor 110a may be used in reverse as a generator to recover energy from braking or to slow the vehicle 100a as it proceeds downhill.

The energy store 120a may include a battery, a cell, and/or other devices for storing electrical energy. The energy store 120a may be connected to the electric motor 110a by cables or other systems for transmitting electrical energy. Lithium-ion based batteries are widely used in electric cars for relatively high power and energy density. The energy store 120a may be charged by a wired connection supplying electricity when the vehicle 100a is not otherwise in use.

The display 130a may comprise any sort of system for depicting information to a driver of the vehicle 100a. Some examples may include a fuel gauge, a speedometer, an infotainment display, etc. Fuel gauges for motor vehicles usually include a float sensor in a fuel tank providing an electric current to an indicator in the dash of the vehicle. The indicator unit may range from "Full" to "Empty" with various fractional markings in between. Some indicator units may include a "low fuel" light at a certain fuel level. In electric vehicles, an analogous charge gauge may depict a total amount of charge in the energy store 120a.

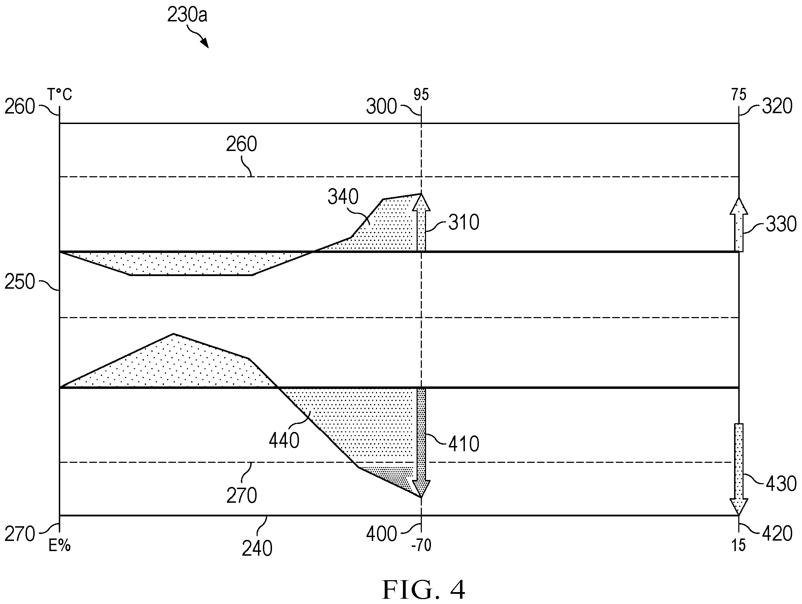

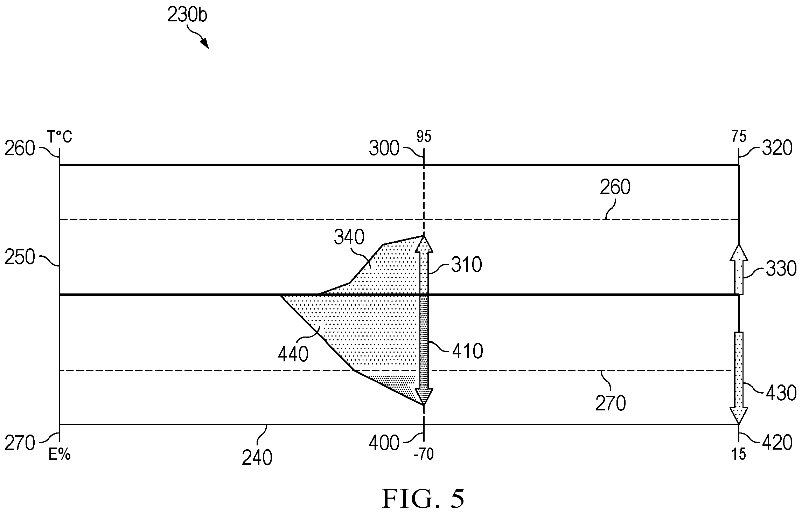

In some embodiments, the display 130a may include a graphical user interface (GUI) with both input and output functions. The display 130a may allow the driver to access a navigation system, including identifying an intended destination. The display 130a may show the driver turn-by-turn driving instructions. In some vehicles, such a navigation system may include autonomous functions for the vehicle, including self-driving automobiles. In the vehicle 100a, the display 130a may provide one or more representations of an intended travel plan, including an intended destination, a current state of the energy store, etc. The specific content of the display 130a is discussed in more detail in relation to Figure 4 and Figure 5.

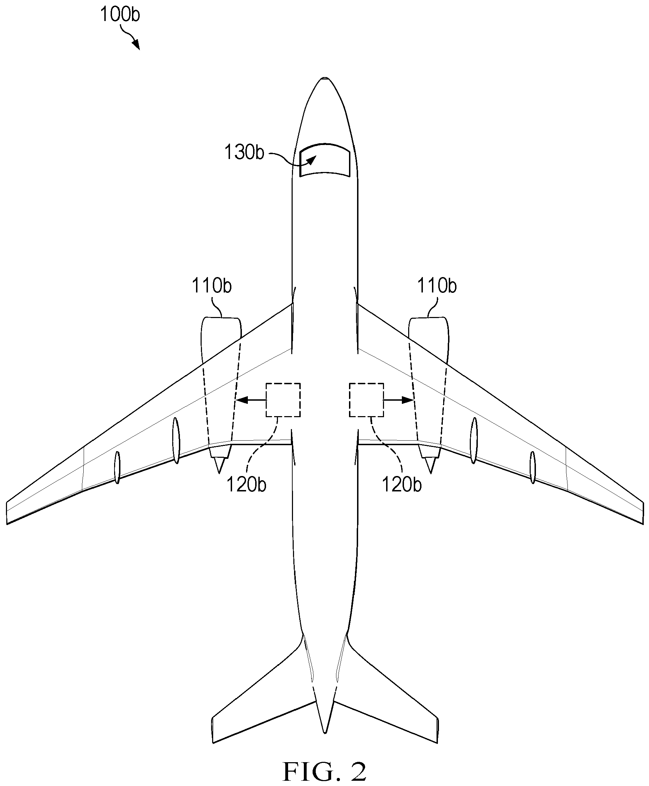

FIGURE 2 is a schematic drawing showing an example embodiment of a vehicle 100b incorporating teachings of the present disclosure. As shown, vehicle 100b comprises an aircraft with at least one electric motor 110b for propulsion, at least one energy store 120b for providing energy to the electric motor 110b, and a display 130b visible to a pilot or occupant of the vehicle 100b. Vehicle 100b may, in some instances, also include an internal combustion engine (a so-called hybrid drive vehicle). An "electric aircraft" usually refers to an aircraft propelled by one or more electric motors 110b using only electrical energy.

The electric motor 110b may comprise an electrical machine converting electrical energy into mechanical energy to propel the aircraft. In general, the electric motor 110b may be driven by a direct current supply from the energy store 120b.

The energy store 120b may include a battery, a cell, and/or other devices for storing electrical energy. The energy store 120b may be connected to the electric motor 110b by cables or other systems for transmitting electrical energy. The energy store 120b may be charged by a wired connection supplying electricity when the vehicle 100b is not otherwise in use.

The display 130b may comprise any sort of system for depicting information to a pilot of the vehicle 100b. Some examples may include a fuel gauge, a speedometer, an infotainment display, etc. Fuel gauges for motor vehicles usually include a float sensor in a fuel tank providing an electric current to an indicator in the dash of the vehicle. The indicator unit may range from "Full" to "Empty" with various fractional markings in between. Some indicator units may include a "low fuel" light at a certain fuel level. In electric vehicles, an analogous charge gauge may depict a total amount of charge in the energy store 120b.

In some embodiments, the display 130b may include a graphical user interface (GUI) with both input and output functions. The display 130b may allow the pilot to access a navigation system, including identifying an intended destination. The display 130b may show the pilot flying instructions including any information normally provided in a flight plan. In some vehicles, such a navigation system may include autonomous functions for the vehicle, including self-flying aircraft. In the vehicle 100b, the display 130b may provide one or more representations of an intended travel plan, including an intended destination, a current state of the energy store, etc. The specific content of the display 130b is discussed in more detail in relation to Figure 4 and Figure 5.

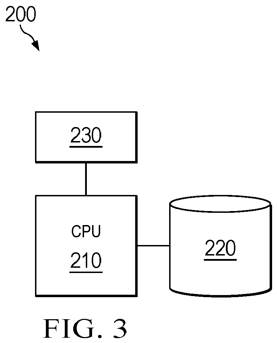

FIGURE 3 is a schematic drawing showing an example embodiment of a system 200 for use in a vehicle 100. The system 200 may include a processor or CPU 210, a memory 220, and a display screen 230. The CPU 210 may be configured to communicate with the memory 220 to access one or more programs, to store or recover data, etc. The CPU 210 may also be configured to control the display screen 230 to depict various information to a user of the system. In some embodiments, the display screen 230 may include a GUI allowing a user to provide information to the CPU 210.

FIGURE 4 is a drawing showing an example embodiment of a display 230a for a vehicle 100 incorporating teachings of the present disclosure. The display 230a may include any sort of graphical display providing information to a user. Some embodiments may include a GUI allowing the user to interact with the information displayed thereupon.

As shown in Figure 4, the display 230a provides an x/y graph with time and/or distance depicted along the x-axis 240. In the example shown, the y-axis 250 is used to track two parameters (260/270). The trace for the two parameters begins at an origination point at the intersection of the x-axis 240 and the y-axis 250. The trace proceeds to the right as time elapses or distance is traveled. The full extent of the y-axis, then, represents an anticipated travel plan with the intended destination at the far right of the display 230a. At a given point along the travel plan, the display 230a may show a point 260 indicating the location of the vehicle along the x-axis 240 and the value of the first parameter 260. Similarly, the display 230b may show a second point 270 showing the value of the second parameter 270 at the same location. In some embodiments, the display 230 may provide any number of traces to display values for one or more parameters of interest.

In this instance, the first parameter tracked is temperature 260 and the second parameter is the state of charge 270 of the energy store 120. Various data depicted may include a numerical indication of a value 300 of the first parameter 260. The display 230a may also show a graphical arrow 310 indicating the value of the first parameter 260 with additional context. The direction of the arrow 310 indicates a change in relation to the previous indicated value. The numerical value 320 may indicate an expected value of the first parameter 260 at the intended destination. The size of graphical arrow 330 may indicate any deviations from the expected value or predicted value. The display 230a may also show a trace of the graphical arrow 310 over time as the travel occurs.

Various data depicted may include a numerical indication of a value 400 of the second parameter 270. The display 230a may also show a graphical arrow 410 indicating the value of the second parameter 720 with additional context. The direction of the arrow 410 indicates a change in relation to the previous indicated value. The numerical value 420 may indicate an expected value of the second parameter 270 at the intended destination. The size of the graphical arrow 430 may indicate any deviations from the expected value or predicted value. The display 230a may also show a trace of the graphical arrow 410 over time as the travel occurs.

In some embodiments, the graphical arrows 310/410 may represent a departure or deviation from an expected value of the respective parameter based on a travel plan and/or flight plan. In some embodiments, the size of the arrows 310/410 represent a gross amount of the deviation, the direction of the arrow (up or down in the case shown) represents a positive or negative deviation, and the color of the arrow indicates an interpretation of the effect of the deviation (e.g., a green arrow indicates no effect, an amber arrow indicates a warning of some sort, and a red arrow indicates an alert requiring consideration if not altering a travel plan).

FIGURE 5 is a drawing showing an example embodiment of a display 230b for a vehicle incorporating teachings of the present disclosure. The display 230b includes similar data as described in relation to Figure 4. The elements with the same reference numbers correspond to that description as well. In comparison to the display 230a, however, the traces shown in display 230b are presented in a more compact version. The example shown depicts only those portions of the traces 340/440 which correspond to potential adverse or concerning values. That is, if the value of the tracked parameters is in the "safe" or "no effect" range, there is no graphical arrow 310/410 shown at that point of travel. This display 230b may provide additional benefits to a driver or pilot because the arrows only appear if intervention may be called for and the display may be decluttered to highlight the relevant information.

In practice, the display 230 may track and/or display any number of operating parameters appropriate for the vehicle 100 in question. In some embodiments, the teachings herein may provide graphic representation of the state of the energy store 120 that is easy to interpret and understand, regardless of the prior experience or expectation of a driver or pilot. The display 230 may provide continuous awareness and early warning the case of potential shortage of energy based on the intended destination without requiring a significant amount of display space. For example, the displays 230 described herein may be displayed on a primary flight display of an aircraft without interfering with other flight operations. Such an indication of the state of the energy stores supports decision making with early warnings of potential problems, increasing the safety of a trip or flight and potentially avoiding significant effects of unpredicted changes in the state of the energy store 120.

## Claims

1. A method for operating a drive system of a vehicle including an energy store, the method comprising:
accessing a travel plan for the vehicle;
wherein the travel plan identifies an intended destination and a predicted state of the energy store including multiple values for a first operating parameter of the energy store throughout the planned travel based on a predicted demand from the drive system, including a final value representing an expected value for the first operating parameter at the intended destination;
determining an instantaneous location of the vehicle;
determining a predicted current value for the first operating parameter based on the instantaneous location and the travel plan;
measuring an instantaneous value for the first operating parameter of the energy store;
calculating a first deviation between the predicted current value and the measured instantaneous value;
calculating an expected final value for the first operating parameter upon reaching the intended destination based on the instantaneous value and power demand over a remainder of the travel plan;
calculating a second deviation between the predicted final value and the expected final value;
indicating to an operator both the first deviation and the second deviation; and
executing one or more changes to controls of the drive system in response to at least one of the two deviations.

2. A method as recited in Claim 1, wherein the vehicle comprises an aircraft.

3. A method as recited in Claim 1, wherein:
the vehicle comprises an aircraft; and
the energy store provides electrical energy to the drive system.

4. A method as recited in Claim 1, wherein indicating the first deviation and the second deviation includes displaying a graphical plot of the first deviation and the second deviation.

5. A method as recited in Claim 4, wherein the graphical plot includes multiple iterations of the first deviation and the second deviation calculated at multiple locations.

6. A method as recited in Claim 4, wherein the graphical plot includes at least one change of color in an event where the first deviation or the second deviation require operator intervention.

7. A method as recited in Claim 1, further comprising:
executing the method for a second operating parameter of the energy store; and
displaying the respective first deviation and the respective second deviation of the second operating parameter along a shared time axis with the respective first deviation and the respective second deviation of the first operating parameter.

8. A system for a vehicle with a drive system supplied by an energy store, the system comprising:
a control unit with a processor and a memory;
a display configured to display an x versus y graph with travel distance along an x-axis;
wherein a leftmost point of the x-axis represents a starting point for a planned trip and a rightmost point of the x-axis represents an intended destination for the planned trip;
wherein the memory stores a travel plan includes a predicted state of the energy store including a predicted final value for a first operating parameter of the energy store upon arrival at the intended destination based on a predicted demand from the drive system;
wherein the processor indicates an instantaneous location of the vehicle depicted by an active trace moving along the x-axis;
wherein a current value for the first operating parameter is indicated by a position of the active trace along a y-axis;
wherein the processor accesses the travel plan to determine a predicted value for the first operating parameter based on the instantaneous location and the travel plan;
wherein the processor calculates a first deviation between the predicted value and the instantaneous value;
wherein the processor calculates an expected final value for the first operating parameter upon reaching the intended destination based on the instantaneous value and a remainder of the travel plan;
wherein the processor calculates a second deviation between the predicted final value and the expected final value; and
wherein the display indicates to an operator both the first deviation and the second deviation.

9. A system as recited in Claim 8, wherein the vehicle comprises an aircraft.

10. A system as recited in Claim 8, wherein:
the vehicle comprises an aircraft; and
the energy store stores electrical energy for use by the drive system.

11. A system as recited in Claim 8, wherein the graphical plot includes at least one change of color in an event where the first deviation or the second deviation require operator intervention.

12. A system as recited in Claim 8, wherein the processor controls the display to:
depict a current value second operating parameter of the energy store along the y-axis at the instantaneous location;
display a respective first deviation and a respective second deviation of the second operating parameter along with the respective first deviation and the respective second deviation of the first operating parameter.

13. A vehicle comprising:
a drive system;
an energy store providing energy to the drive system;
a control unit with a processor and a memory; and
a display configured to display an x versus y graph with travel distance along an x-axis;
wherein a leftmost point of the x-axis represents a starting point for a planned trip and a rightmost point of the x-axis represents an intended destination for the planned trip;
wherein the memory stores a travel plan includes a predicted state of the energy store including a predicted final value for a first operating parameter of the energy store upon arrival at the intended destination based on a predicted demand from the drive system;
wherein the processor indicates an instantaneous location of the vehicle depicted by an active trace moving along the x-axis;
wherein a current value for the first operating parameter is indicated by a position of the active trace along a y-axis;
wherein the processor accesses the travel plan to determine a predicted value for the first operating parameter based on the instantaneous location and the travel plan;
wherein the processor calculates a first deviation between the predicted value and the instantaneous value;
wherein the processor calculates an expected final value for the first operating parameter upon reaching the intended destination based on the instantaneous value and a remainder of the travel plan;
wherein the processor calculates a second deviation between the predicted final value and the expected final value; and
wherein the display indicates to an operator both the first deviation and the second deviation.

14. A vehicle as recited in Claim 13, wherein the vehicle comprises an aircraft.

15. A vehicle as recited in Claim 13, wherein:
the vehicle comprises an aircraft; and
the energy store stores electrical energy for use by the drive system.

16. A vehicle as recited in Claim 13, wherein the graphical plot includes at least one change of color in an event where the first deviation or the second deviation require operator intervention.

17. A vehicle as recited in Claim 13, wherein the processor controls the display to:
depict a current value second operating parameter of the energy store along the y-axis at the instantaneous location;
display a respective first deviation and a respective second deviation of the second operating parameter along with the respective first deviation and the respective second deviation of the first operating parameter.
